**Europäisches Patentamt**

**European Patent Office**

**Office européen des brevets**

(19)

(11) Veröffentlichungsnummer: **0 137 052**
**B1**

(12) **EUROPÄISCHE PATENTSCHRIFT**

(45) Veröffentlichungstag der Patentschrift:
**14.01.87**

(51) Int. Cl.⁴: **F 15 B 19/00,** B 64 C 13/42

(21) Anmeldenummer: **83108792.9**

(22) Anmeldetag: **07.09.83**

(54) Prüfeinrichtung für redundante Flugsteuerung.

(43) Veröffentlichungstag der Anmeldung:
**17.04.85 Patentblatt 85/16**

(45) Bekanntmachung des Hinweises auf die Patenterteilung:
**14.01.87 Patentblatt 87/3**

(84) Benannte Vertragsstaaten:
**BE DE FR GB IT SE**

(56) Entgegenhaltungen:
**EP-A-0 068 728**
**US-A-4 181 017**

(73) Patentinhaber: **Feinmechanische Werke Mainz GmbH, Industriestrasse 56, D-6500 Mainz 1 (DE)**

(72) Erfinder: **Hesse, Konrad, Dipl.- Ing., Dominikanerstrasse 5a, D-6500 Mainz 1 (DE)**
Erfinder: **Diessel, Günter, Dipl.- Ing., Spitzwegstrasse 3a, D-6500 Mainz 1 (DE)**

(74) Vertreter: **Blumbach Weser Bergen Kramer Zwirner Hoffmann Patentanwälte, Sonnenbergerstrasse 43, D-6200 Wiesbaden 1 (DE)**

EP 0 137 052 B1

## Beschreibung

Die Erfindung bezieht sich auf eine Prüfeinrichtung für eine redundante Flugsteuerung insbesondere zur Verstellung der Rotorblätter von Hubschraubern mit den Merkmalen des Oberbegriffs des Anspruchs 1.

Aus sicherheitsgründen werden die hydraulischen und elektrohydraulischen Stellantriebssysteme für Flugsteuerungen mit wenigstens zwei parallel angeordneten Stellantrieben, also in Tandem- oder Zwillingsbauweise, ausgeführt, um beim Ausfall des einen stellantriebs mit dem anderen stellantrieb noch die Flugsteuerung durchführen zu können. Wenn der eine stellantrieb ausfällt, darf dieser Ausfallnicht zur Blockade der Flugsteuerung führen. Aus diesem Grunde ist ein sogenanntes Bypass-Ventil vorgesehen, mit dessen Hilfe der fehlerhafte stellantrieb gewissermaßen umgangen d.h. hydraulisch entkoppelt wird, im vorliegenden Fall durch Kurzschlun der beiden Zylinderkammern des fehlerhaften Stellantriebs.

Um sicherzustellen daß vor Antritt eines Fluges beide Stellantriebe funktionsfähig sind, sollte eine Vorflugkontrolle durchgeführt werden. Darüberhinaus soll auch im Falle eines Fehlers während des Fluges eine Uberwachung möglich sein.

Zur Prüfung der einwandfreien Schaltfunktion des Bypass-Ventils können elektrische Positionstaster verwendet werden. Wegen der Redundanz der Stellantriebe und wegen des vorhandenen Stellantriebs in mehreren Flugsteuerachsen bedeutet dies eine Vielzahl von Meßgebern, elektrischen Elementen Kabeln und Steckdosen sowie Anzeigeelementen.

Der Erfindung liegt die Aufgabe zugrunde, eine Prüfeinrichtung an einer Flugsteuerung zu schaffen, die mit wenig Anzeigeelementen auskommt und eine Überprüfung der Funktionsfähigkeit durch Fehlersimulation vor dem Flug und eine Uberwachung während des Fluges im betreffenden Hydraulikkreis ermöglicht.

Die gestellte Aufgabe wird aufgrund der Mannahmen des Hauptanspruchs gelöst.

Bei der Erfindung wird der Ausfall der hydraulischen Versorgung in einem der beiden Antriebsteile simuliert und festgestellt, ob das Bypass-Ventil in dieser Situation einwandfrei funktioniert. Ferner wird das Klemmen des betreffenden Steuerventils simuliert und ebenfalls festgestellt, ob das Bypass-Ventil daraufhin richtig reagiert. Zur Durchführung dieser Fehlersimulation ist jeweils ein Absperrventil in der Versorgungsleitung und eine Arretiereinrichtung an den jeweiligen Steuerventilen vorgesehen. Als Anzeigegerät zur Fehlerüberwachung benötigt man lediglich einen Volumenstrommesser. Aufgrund der Beobachtung an einem oder zwei Meßgeräten oder deren Differenzwerten z.B. im Cockpit bei einer durchgeführten Fehlersimulation oder während des Fluges im Fehlerfalle läßt sich das einwandfreie Funktionieren des Bypass-Ventils beurteilen.

Ein Ausführungsbeispiel der Erfindung wird anhand der Zeichnung beschrieben. Dabei zeigt.:

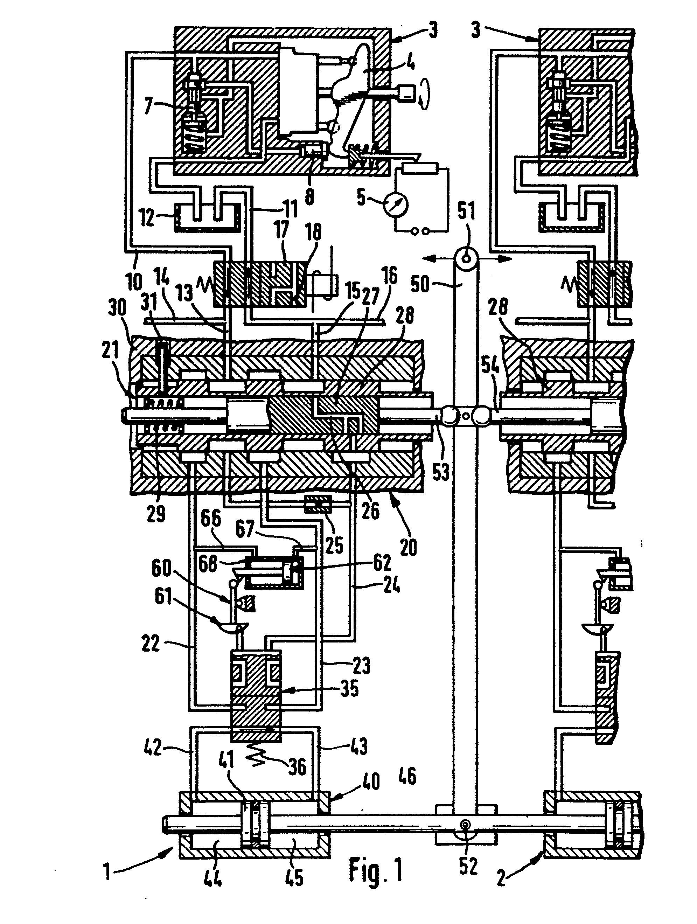

Fig. 1 eine Flugsteuerung in schematischer Darstellung und

Fig. 2 eine Einzelheit daraus.

Die Flugsteuerung enthält zwei Stellantriebe 1 und 2, wobei der Stellantrieb 1 vollständig dargestellt ist, während der Stellantrieb 2 nur angedeutet ist, da er dem Stellantrieb 1 entspricht. Jeder Stellantrieb I, 2 enthält eine Pumpe mit variablem Förderstrom, beispielsweise eine Axialkolbenpumpe 3, die als solche eine Schrägscheibe 4 aufweist, um den Volumenstrom der Pumpe verändern zu können. Die Winkelstellung der Schrägscheibe 4 ist ein Maß für den Volumenstrom und wird durch ein Meßinstrument 5 angezeigt. Zur Druckregelung ist ein Kompensator 7 vorgesehen, der aus einer Druckwaage besteht und den Druck in einer Versorguhgsleitung 10 auf einen bestimmten Wert einregelt. Der Kompensator 7 steuert dabei die Zufuhr von Flüssigkeit zu einem Stellzylinder 8, der die Winkelposition der Schrägscheibe 4 bestimmt.

Neben der Versorgungsleitung 10 ist eine Rücklaufleitung 11 zum Tank 12 vorgesehen. Die Versorgungsleitung 10 gabelt sich in Zweigleitungen 13, 14 und die Rücklaufleitung 11 in Zweigleitungen 15, 16. Es können noch weitere Zweigleitungen vorgesehen sein. Je eine Versorgungs-Zweigleitung 13 und eine Rückführungs-Zweigleitung 15 dient zum Betrieb eines Stellantriebs 1 einer Gruppe, d.h. die Leitungen 14 und 16 sind mit einer weiteren Gruppe von Stellantrieben verbunden. Auf diese Weise können mehrere Stellantriebe ("mehrere Achsen") von ein und derselben Pumpe 3 hydraulisch versorgt werden.

Im Zuge der Leitungen 10, 11 ist ein Magnetventil 17 angeordnet, welches je nach Schaltstellung den Förderstrom durchschaltet oder sperrt.

Die Versorgungs-Zweigleitung 13 mündet in das Gehäuse eines Steuerventils 20, welches in der Hauptfunktion als 4/3-Wegeventil ausgebildet ist und die Leitung 13 sperren kann oder wechselweise mit Arbeitsleitungen 22, 23 verbindet. Das Steuerventil 20 weist außerdem eine Bypass-Ventil-Steuerleitung 24 auf, die über eine Drossel 25 mit der Leitung 13 verbunden ist, ferner über einen internen Kanal 26 mit der Tankleitung 11 verbunden werden kann. Das Steuerventil 20 weist einen zweiteiligen Ventilschieber 21 auf, der aus einem Steuerschieber 28 und einem Überdrückschieber 27 besteht, die ineinander gefügt sind und über Zentrierfedern 29 aneinander gefesselt sind. Der Steuerschieber 28 ist mit einer Innenbohrung versehen und weist die üblichen Steuerkanten auf. Der innere, stempelartige Uberdrückschieber 27 läßt sich gegen die Kraft der Federn 29 bewegen, wenn der Steuerschieber 28 in einer Schieberhülse 30 festgeklemmt sein sollte, die Teil des Ventilgehäuses ist. Bei dieser Relativverschiebung des inneren Uberdrückschiebers 27 gegen den Steuerschieber 28 kommt es zur hydraulischen Verbindung des Kanals 26 mit der Steuerleitung 24, die daraufhin auf niedrigem Druck kommt. Man kann dieses Klemmen des Steuerschiebers 28 künstlich herbeiführen, indem ein Arretierstift 31 durch eine entsprechende Bohrung durch die Schieberhülse 30 und Steuerschieber 28 gesteckt wird.

Die Arbeitsleitungen 22 und 23 führen zu einem Vierwegeventil 35 mit zwei Schaltstellungen, welches als Bypass-Ventil bezeichnet wird. Das Bypass-Ventil schaltet normalerweise die Arbeitsleitungen 22 und 23 zu weiterführenden Arbeitsleitungen 42, 43 durch, und zwar weil normalerweise Druck in der Steuerleitung 24 anliegt. In der anderen Schaltstellung, die durch die Kraft einer -Ventilfeder 36 herbeigeführt wird, sind die weiterführenden Arbeitsleitungen 42, 43 kurzgeschlossen.

Die weiterführenden Arbeitsleitungen 42, 43 führen in Zylinderräume 44, 45 eines Zylinders 40 mit Stellkolben 41, der über eine Kolbenstange 46 mit der zu verstellenden Einrichtung, beispielsweise der Drehwinkelverstellung der Rotorblätter eines Hubschraubers, verbunden ist. Wenn die Arbeitsleitungen 22, 23 mit ihren weiterführenden Arbeitsleitungen 42 bzw. 43 verbunden sind, wird der Stellkolben 4l angetrieben, und es erfolgt eine Verstellung des anzutreibenden Teils, wenn jedoch die weiterführenden Arbeitsleitungen 42, 43 kurzgeschlossen sind, wie in der Zeichnung dargestellt, nimmt der Stellkolben 41 eine Schwimmstellung ein, da beispielsweise aus dem Raum 44 verdrängte Flüssigkeit in den Raum 45 nachströmen kann, ohne dan dies zu einer Hemmung des Stellantriebs führt.

Wie bereits angedeutet, existiert zum Stellantrieb 1 ein benachbarter Stellantrieb 2, der gleichartig ausgebildet ist und deshalb nicht im einzelnen beschrieben werden muß. Die Kopplung zwischen den beiden Stellantrieben 1, 2 erfolgt über einen Steuerhebel 50, welcher gleichzeitig der Rückführung der Stellgröne dient und Teil eines Steuer- und Rückführungshebelgestänges ist. Der Steuerhebel 50 weist ein Hebelende 51 auf, an welchem der Angriff des Steuerknüppels oder eines Verbindungsgliedes zum Steuerknüppel angreift und den Hebel 50 um einen Drehpunkt 52 schwenken länt. Der Drehpunkt 52 ist an der Kolbenstange 46 angebracht. Am Steuerhebel 50 sind Stangen 53 und 54 angelenkt, die mit dem jeweiligen Uberdrückschieber 27 verbunden sind. Bei einer Schwenkung des Steuerhebels 50 erfolgt somit eine Verstellung der Steuerschieber 28, und zwar normalerweise in deren gewünschte Schaltposition, weil durch die Federfesselung 29 die auf den Uberdrückschieber 27 ausgeübte Kraft auf den Steuerschieber 28 übertragen wird.

Bei einem Klemmen des Steuerschiebers 28 erfolgt eine Verschiebung des Überdrückschiebers 27 gegenüber diesem Steuerschieber 28, und die Leitung 24 wird über den Kanal 26 mit der drucklosen Leitung 11 verbunden, so daß wegen der Existenz der Drossel 25 die Steuerleitung 24 auf niedrigen Druck gerät. Das Bypass-Ventil 35 kann infolge der Ventilfeder 36 seine Durchlan-Schaltstellung nicht länger aufrecht erhalten und überführt den Stellkolben 41 in die Schwimmstellung. Die Kolbenstange 46 wird somit nicht blockiert, wenn der benachbarte Stellantrieb ordnungsgemän die Steuerfunktion ausführt.

Wenn im Stellantrieb 1 der Steuerschieber 28 klemmt, sperrt der Uberdrückschieber 27 bei seiner Rückführbewegung die Mündung der Steuerleitung 24 kurzzeitig, wie in der Zeichnung dargestellt, so dan sich in der Steuerleitung 24 ein gewisser Druck über die Drossel 25 aufbaut und das Bypass-Ventil 35 in die Durchlan-Schaltstellung oder eine Zwischenstellung umschaltet. Man kann dies am Steuerknüppel merken. Wenn man diese Erscheinung verhindern will, kann man eine Verriegelungseinrichtung 60 vorsehen. Diese besteht aus einer Fangeinrichtung 61 und einer Freigabeeinrichtung 62.

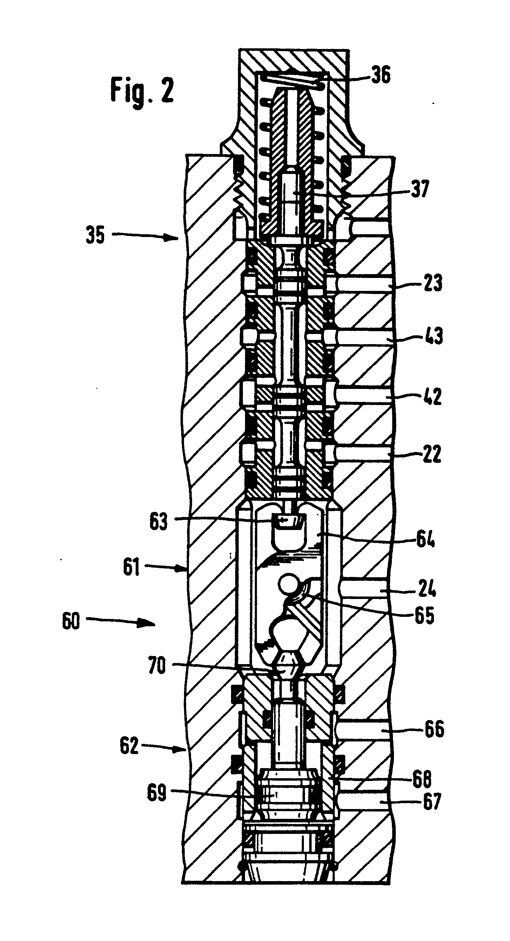

In Fig. 2 ist das Bypass-Ventil 35 mit der Verriegelungseinrichtung 60 im einzelnen dargestellt. Am Ventilschieber 37 des Bypass-Ventils 35 ist eine Klinke 63 befestigt, die mit Schrägfläche und einer Hinterschneidung versehen ist und mit einer Zange 64 zusammenarbeitet, welche ebenfalls mit Schrägflächen und Hinterschneidungen versehen ist. Die Zange 64 ist durch eine Feder 65 in SchlieBstellung vorgespannt. Wenn der Ventilschieber 37 in die Bypass-Stellung'fährt, wird die Zange infolge der Schrägflächen an der Klinke 63 zunächst gespreizt und dann geschlossen, wobei die Hinterschneidungen von Zange und Klinke aufeinander liegen, wie in Fig. 2 dargestellt. Das Bypass-Ventil 35 wird also in seiner Bypass-Stellung gefangen, und zwar so lange, bis ein Druckwechsel in den Arbeitsleitungen 22, 23 stattfindet. Diese sind über Stichleitungen 66 und 67 mit einem Zylinder 68 verbunden, an dessen Kolben 69 ein Nocken 70 befestigt ist, der mit der Zange 64 zusammenarbeitet. Bei einem Bewegungsspiel wird nämlich die Zange geöffnet, so dau das Bypass-Ventil 35 in seine Normalstellung zurückkehren kann, die es bei Druck in der Steuerleitung 24 annimmt.

Zur Uberprüfnng der Funktionstüchtigkeit des Bypass-Ventils 35 wird eine Fehlersimulation durchgeführt.

Der Ausfall der Pumpe 3 des Stellantriebs 1 oder 2 wird durch Einschalten des betreffenden Magnetventils 17 simuliert, und zwar nachdem das Triebwerk des Flugzeugs oder Hubschraubers hochgelaufen und der Systemdruck erreicht worden ist. Dabei wird jeweils einer der Stellantriebe langsam betätigt. Infolge der Absperrung des Förderstroms durch das Magnetventil 17 fördert die diesbezügliche Pumpe 3 nicht, was durch das Meßinstrument angezeigt wird. Dagegen fördert die benachbarte Pumpe 3 des Stellantriebs 2, was an deren Meßeinrichtung ablesbar ist. Wenn das Bypass-Ventil 35 nicht in die dargestellte Lage umgeschaltet hat, bleiben die Arbeitsleitungen 22 oder 23 über die weiterführenden Arbeitsleitungen 42 oder 43 mit den Zylinderräumen 44 oder 45 verbunden. Der auftretende Fehler wird sich darin bemerkbar machen, daß der Stellkolben mit stark verminderter Geschwindigkeit läuft. Zu diesem Zweck ist nämlich eine Drossel 18 im Rücklauf des Magnetventils 17 vorgesehen, wenn dieses die Sperrstellung für die Versorgungsleitung 10 einnimmt.

Wird das Magnetventil 17 erneut auf Durchlaß geschaltet, so müssen die Meßanzeigen der beiden Meßeinrichtungen 5 in Übereinstimmung kommen. Dies ist ein Beweis für das Durchschalten des Bypass-Ventils 35 in die Durchlaßposition.

Die gleiche Überprüfung erfolgt durch Sperren des Magnetventils 17 des Stellantriebs 2.

Das Klemmen des Steuerantriebs des Steuerventils 20 wird durch Einrücken des Arretierstiftes 31 simuliert. Der Steuerschieber 28 kann sich dann nicht mehr bewegen, und die Wege des Steuerventils können nicht ordnungsgemäß geschaltet werden. In diesem Fall bewegt sich nur der Überdrückschieber 27 und gelangt in eine Stellung, bei der die Steuerleitung 24 praktisch drucklos wird. Das Bypass-Ventil 35 gelangt in die dargestellte Sperr- und Schwimmstellung. Wenn dies nicht der Fall wäre, würde der Stellkolben 41 blockiert für den Fall, daß der Steuerschieber in Null-Stellung arretiert ist, oder mit stark verminderter Laufgeschwindigkeit sich bewegen für den Fall, daß der Steuerschieber eine Leichte Nullpunktsverschiebung hat aufgrund von Fertigungstoleranzen der Arretiereinrichtung.

Wenn an dem Bypass-Ventil 35 eine Störung dahingehend auftritt, daß der Ventilschieber 37 statt eine seiner definierten Endstellungen einzunehmen, eine Zwischenposition einnimmt, dann kann dies der Pilot durch Vergleich der Volumenstrommeßwerte der benachbarten Instrumente 5 - also in einer Gruppe von Stellantrieben 1,2 - merken. Bei der Durchführung von Steuerbewegungen bewegen sich nämlich die Stellkolben 41 der Gruppe wegen ihrer Kopplung gemeinsam und mit gleicher Geschwindigkeit, so daß jeder Verdrängungsstrom über die Zylinder 40 einer Gruppe gleich ist. Über das in Zwischenstellung befindliche Bypass-Ventil 35 fließt noch ein zusätzlicher Leckstrom, der von der betreffenden Pumpe 3 mitgeliefert wird, so daß diese einen erhöhten Volumenstromwert gegenüber der Nachbarpumpe aufweist.

Statt der Messung der Winkellage der Schrägscheibe 4 durch das Meßinstrument 5 kann auch ein konventioneller hydraulischer Strommesser verwendet werden. Dieser kann in der Versorgungsleitung 10, der Rücklaufleitung II oder in einer der Arbeitsleitungen 22 oder 23 angeordnet werden. Das Magnetventil 17 kann auch als einfaches Absperrventil für die Versorgungsleitung 10 ausgebildet sein. Ein gut trainierter Pilot kann auch dann eine geringe Verstellung der Rotorblätter des Hubschraubers wahrnehmen.

Beim Fortfall der Verriegelungseinrichtung 60 macht sich lediglich ein Ruck beim Umsteuern der Verstellung der Rotorblätter bemerkbar, wenn der (seltene) Fall des Klemmens des Schiebers 2B eintritt. Die Sicherheit der Flugsteuerung wird dadurch nicht aufgehoben.

Statt zweier Stellantriebe 1, 2 nebeneinander kann auch eine Mehrfachanordnung vorgesehen sein, wie dies insbesondere in Flugzeugen praktiziert wird. Statt der mechanischen Eingabe und Rückführung über das Hebelgestänge 50, 53 54 kann auch eine elektrische oder elektro-hydrau-lsiche Eingabe- und Rückführungseinrichtung vorgesehen sein.

**Patentansprüche**

1. Prüfeinrichtung für redundante Flugsteuerung, insbesondere zur Verstellung der Rotorblätter von Hubschraubern, mit folgenden Merkmalen:

es ist wenigstens eine Gruppe gekoppelter Stellantriebe (1, 2) und Pumpen (3) mit variablem Förderstrom vorgesehen, wobei jedem Stellantrieb (1, 2) eine Pumpe (3) zugeordnet ist, deren Versorgungs- und Rücklaufleitungen (10, 11) auch mit einem stellantrieb wenigstens einer weiteren Gruppe gekoppelter Stellantriebe verbunden sein können;

jeder stellantrieb (1, 2) enthält ein überdrückbares steuerventil (20) , ein Bypass-Ventil (35) zur Außerfunktionsetzung des zugehörigen Stellantriebs (1, 2) bei einer Störung und

einen doppelt wirkenden Zylinder (40) mit Stellkolben (41);

die stellantriebe (1, 2) einer Gruppe sind eingangsseitig über eine Steuer- und Rückführungseinrichtung (50, 53, 54) und ausgangsseitig über die stellkolben (41, 46) miteinander gekoppelt;

das überdrückbare steuerventil (20) ist als Wegeventil zum Ansteuern von Arbeitsleitungen (22, 23) zu und von dem Zylinder (40) ausgebildet und weist eine zusätzliche steuerleitung (24) zum Bypass-Ventil (35) auf, die in der Überdrückstellung des steuerventils (20) drucklos gemacht wird;

das Bypass-Ventil (35) ist in Abhängigkeit vom Druck bzw. fehlendem Druck in der zusätzlichen steuerleitung (24) schaltbar und hat bei anliegendem Druck eine Durchlaß-Schaltstellung für die Arbeitsleitungen (22, 23) und bei fehlendem Druck eine Bypass-Stellung, in welcher die Arbeitsleitungen (22, 23) abgesperrt und die beiden Kolbenseiten (44, 45) des Zylinders (40) in Schwimmstellung hydraulisch miteinander verbunden sind, gekennzeichnet durch folgende Maßnahmen: jeder Pumpe (3) oder jedem Zylinder (40) ist ein Volumenstrommesser (5) zugeordnet;

in der Versorgungsleitung (10) vor dem angehörigen Steuerventil (20) ist jeweils ein Absperrventil (18) zugeordnet, so daß in dessen Sperrstellung die Nullförderposition der betreffenden Pumpe (3) beibehalten bleibt, auch wenn die Steuer- und Rückführeinrichtung (50, 53, 54) betätigt wird und der Volumenstrommesser (5) der benachbarten Pumpe dabei einen Wert zeigt, wobei sich die Überführung des betreffenden Bypass-Ventils (35) in die Bypass-Stellung darin zeigt, daß der benachbarte Stellantrieb (2) funktionsfähig ist; das jeweilige Steuerventil (20) eines Stellantriebs (1,2) ist unabhängig vom benachbarten Steuerventil einer Gruppe arretierbar, so daß bei einer Betätigung der Steuer- und Rückführeinrichtung (50, 53, 54) die Überdrückstellung des Steuerventils (20) eingenommen wird, das betreffende Bypass-Ventil (35) in die Bypass-Stellung übergeht und der Volumenstrommesser (5) der benachbarten Pumpe (3) oder des benachbarten Zylinders (40) einen Wert zeigt, wenn die Flugsteuerung in Ordnung ist.

2. Prüfeinrichtung nach Anspruch I, dadurch gekennzeichnet, daß der Volumenstrommesser (5) als Winkelerfaßgerät der Schrägscheibe (4) einer Axialkolbenpumpe (3) ausgebildet ist.

3. Prüfeinrichtung nach Anspruch 1 oder 2, dadurch gekennzeichnet, daß bei der Vorflugkontrolle und bei abgeschaltetem Absperrventil (17) der Rücklauf (15) zum Tank (12) durch eine Drossel (18) hindurch erfolgt,so daß im Falle eines Fehlers des Bypassventiles (35) die Fehlfunktion durch stark verminderte Laufgeschwindigkeit des Arbeitskolbens (41) erkennbar wird.

4. Prüfeinrichtung nach einem der Ansprüche I-3, dadurch gekennzeichnet, daß dem Bypass-Ventil (35) eine Verriegelungseinrichtung (60) zugeordnet ist, die im Falle eines Klemmens des Steuerschiebers (28) den Bypass-Schieber (37) mittels einer Fangeinrichtung (61) in der Bypass-Stellung fängt und darin auch dann noch hält wenn der Überdrückschieber (27) wieder zurückgestellt, d.h. in Null-Position gebracht wird und dabei den Druck in der Steuerleitung (24) zum Bypass-Ventil (35) ansteigen läßt, und daß zufolge einer Freigabeeinrichtung (62) die Verriegelung erst dann wieder aufgehoben wird, wenn nach Beseitigung des Klemmens Druckänderungen in den Arbeitsleitungen (22, 23) zum Zylinder infolge Steuerschieberauslenkung (20) eintreten.

5. Prüfeinrichtung nach Anspruch 4, dadurch gekennzeichnet, daß die Freigabeeinrichtung (62) einen mit den Arbeitsleitungen (22, 23) verbundenen Zylinder (68) und einen kolbenbetätigten Nocken (70) enthält, der die Fangeinrichtung (61) kurzzeitig, während der Bewegung des Kolbens (69) des Zylinders (68), unwirksam werden läßt.

## Claims

1. A checking device for duplicated flight controls, more particularly for adjusting helicopter rotor blades, having the following features.:
- at least one group of coupled actuators (1, 2) and variable-displacement pumps (3) are provided each actuator (1, 2) having associated therewith a pump (3) whose supply and return lines (10, 11) can also be connected to an actuator of at least one other group of coupled actuators;.
- each actuator (1, 2) comprises an override control valve (20) a bypass valve (35) for rendering the associated actuator (1, 2) inoperative in the event of a malfunction and a double-acting cylinder (40) with an actuating piston (41);
- the actuators (1, 2) of a group are coupled together via a control and return system (50, 53, 54) on the input side and via the actuating pistons (41, 46) on the output side;
- the override control valve (20) is in the form of a directional control valve for controlling working lines (22, 23) to and from the cylinder (40) and has an additional control line (24) to the bypass valve (35) which is depressurized in the override position of the control valve (20);
- the bypass valve (35) is switchable in dependence on the pressure or absence of pressure in the additional control line (24) and in the presence of pressure has an open position for the working lines (22, 23) and in the absence of pressure has a bypass position in which the working lines (22, 23) are shut off and the two piston sides (44, 45) of the cylinder (40) are hydraulically interconnected in the floating position, characterised in that
- each pump (3) or each cylinder (40) has a volumetric flow meter (5) associated with it;
- each supply line (10) contains a shut-off valve (18) in front of the associated control valve (20) so that in the closed position of the valve the zero-delivery position of the associated pump (3) is maintained even if the control and return system (50, 53, 54) is actuated and the volumetric flow meter (5) of the adjacent pump in these conditions shows a value movement of the associated bypass valve (35) into the bypass position showing in that the adjacent actuator (2) is serviceable;
- the associated control valve (20) of each . actuator (1,2) is stoppable independently of the adjacent control valve of a group so that on actuation of the control and return system (50, 53, 54) the override position of the control valve (20) is assumed the associated bypass valve (35) passes into the bypass position and the volumetric flow meter (5) of the adjacent pump (3) or of the adjacent cylinder (40) shows a value when the flight control system is in order.

2. A checking device according to claim 1 characterised in that the volumetric flow meter (5) is constructed as a detector for the angle of the swashplate (4) of an axial piston pump (3).

3. A checking device according to claim 1 or 2, characterised in that during the pre-flight check and with the shut-off valve (17) disconnected the return (15) to the tank (12) is taken through a choké (18) so that in the event of a fault in the bypass valve (35) the fault is shown by greatly reduced speed of movement of the working piston (41).

4. A checking device according to any one of claims 1 to 3, characterised in that the bypass valve (35) has associated with it an interlocking device (60) which, in the event of the control spool (28) jamming, traps the bypass spool (37) in the bypass position by means of a trap (61) and continues to hold it in that position even if the override spool (27) is reset, i. e. returned to zero, and causes the pressure in the control line (24) to the bypass valve (35) to rise, and the interlock cannot be- released by a release device (62) until jamming is eliminated so that pressure variations occur in the working lines (22, 23) to the cylinder as a result of deflection (20) of the control spool.

5. A checking device according to claim 4, charaterised in that the release device (62) comprises a cylinder (68) connected to the working lines (22, 23) , and a piston-actuated cam (70) which temporarily renders the trap (61) inoperative during the movement of the piston (69) of the cylinder (68).

**Revendications**

1. Installation d'essai pour commandes de vol doublées, destinée en particulier au réglage des pales de rotor des hélicoptères, présentant les caractéristiques suivantes:

il est prévu au moins un groupe de vérins couplés (1, 2) et de pompes (3) à débit variable, une pompe (3) étant assignée à chacun des vérins (1, 2), groupe dont les conduites d'alimentation et de retour (10, 11) peuvent être reliées à un des vérins d'un autre groupe;

chacun des vérins (1, 2) comporte un distributeur de surpression (20), une vanne by-pass (35) assurant la mise hors service du vérin (1, 2) correspondant en cas de perturbation, et un cylindre à double action (40) équipé d'un piston pilote (41);

les deux vérins (1, 2) d'un même groupe sont couplés ensemble à l'entrée par un dispositif de commande et de renvoi (50, 53, 54) et à la sortie par l'ensemble piston pilote-bielle (41, 46);

le distributeur de surpression (20) est une vanne à plusieurs voies qui contrôle les conduitas de travail (22, 23) vers et en provenance du cylindre (40) et comporte en outre une conduite de commande (24) vers la vanne by-pass (35), cette conduite étant mise hors pression quand le distributeur (20) est sous surpression;

la vanne by-pass (35) commute en fonction de la pression présante ou absente dans la conduite da commande (24); an présence d'une pression, elle se met en position d'ouverture vers les conduites de travail (22, 23), dans le cas contraire, elle passe en position de by-pass, dans laquelle las conduites de travail (22, 23) sont bloquées, et les deux chambres (44, 45) situées de part et d'autre du piston du cylindre (40) communiquent librement entre ellés, installation caractérisée par les dispositions suivantes:

à chaque pompe (3) et à chaque cylindre (40) est assigné un indicateur de débit volumétrique (5);

une vanne d'arrêt (17) est montée dans la conduite d'alimentation (10), en amont du distributaur (20) correspondant, da telle sorte qu'en cas de fermeture de cetta vanne la pompe (3) correspondante reste en position da débit nul, même quand on actionne la dispositif de commande et de renvoi (50, 53, 54) et que le débitmètre de la deuxiène pompe affiche une certaine valeur, le passage de la vanne by-pass (35) en position de by-pass montrant que le deuxième vérin (2) est en ordre de marche;

chaque distributeur (20) d'un groupe de vérins (1, 2) peut être bloqué indépendamment de l'autre distributeur du groupe, de sorte que lorsqu'on actionne le dispositif de commande et de renvoi (50, 53, 54), le distributeur (20) passe en position de surpression, la vanne by-pass (35) correspondante passant en position de by-pass et le débitmètre (5) de la deuxième pompe (3) ou du deuxième cylindre (40) indiquant une certaine valeur quand la commande de vol est en ordre de marche.

2. Installation d'essai conforme à la revendication 1, caractérisée par le fait que le débitmètre (5) se présente sous la forme d'un capteur d'angle du plateau oblique (4) d'une pompe à piston axial (3).

3. Installation d'essai conforme à la revendication 1 ou 2, caractérisée par le fait que, lors du contrôle avant décollage, la vanne d'arrêt (17) étant fermée, le retour (15) vers le réservoir (12) s'effectue vie un étrangleur (18) de sorte qu'en cas de perturbation de la vanne by-pass (35), le défaut de fonctionnement se manifeste par une réduction considérabla da la vitesse du déplacement du piston pilote (41).

4. Installation d'essai conforme à l'une des revendications 1 à 3, caractérisée par le fait qu'un dispositif de varrouillage (60) est assigné à la vanne by-pass (35), et, en cas de blocage du coulisseau de distribution (28), bloque la tiroir de by-pass (37) an position de by-pass à l'aide d'un dispositif de blocage (61), et maintient le tiroir dans cette position même quand le coulisseau de surpression (27) est rappelé, c'est-à-dire renvoyé à sa position zéro et laisse ainsi monter la pression dans la conduite de commande (24) vers la vanne by-pass (35), et an ce que le dispositif de déblocage (62) ne libère le verrouillage qu'au moment où, après déblocage du coulisseau (28), des modifications de pression ne se manifestant plus dans les conduites de travail (22, 23) vers le cylindre, à la suite du déplacement du coulisseau de distribution dans le distributeur (20).

5. Installation d'essai conforme à la revendication 4, caractérisée par le fait que le dispositif de déblocage (62) comporte un cylindre (68) relié aux conduites da travail (22, 23) et une came (70), actionnée par un piston nautralisant momentanément le dispositif de blocage (61) pendant le déplacement du piston (69) du cylindre (68).

Fig. 1

Fig. 2

0 137 052

3